(19) Europäisches Patentamt / European Patent Office / Office européen des brevets

(11) **EP 4 462 085 A1**

(12) **EUROPÄISCHE PATENTANMELDUNG**

(43) Veröffentlichungstag:
   **13.11.2024  Patentblatt 2024/46**

(21) Anmeldenummer: **24171809.7**

(22) Anmeldetag: **23.04.2024**

(51) Internationale Patentklassifikation (IPC):
   **G01F 1/58** (2006.01)       **G01F 25/10** (2022.01)
   **G01F 1/60** (2006.01)

(52) Gemeinsame Patentklassifikation (CPC):
   **G01F 1/58; G01F 25/10;** G01F 1/60

(84) Benannte Vertragsstaaten:
   **AL AT BE BG CH CY CZ DE DK EE ES FI FR GB GR HR HU IE IS IT LI LT LU LV MC ME MK MT NL NO PL PT RO RS SE SI SK SM TR**
   Benannte Erstreckungsstaaten:
   **BA**
   Benannte Validierungsstaaten:
   **GE KH MA MD TN**

(30) Priorität: **12.05.2023  DE 102023112637**

(71) Anmelder: **Krohne Messtechnik GmbH**
   **47058 Duisburg (DE)**

(72) Erfinder: **Vogt, Michael**
   **44797 Bochum (DE)**

(74) Vertreter: **Gesthuysen Patentanwälte**
   **Partnerschaftsgesellschaft mbB**
   **Huyssenallee 68**
   **45128 Essen (DE)**

(54) **VERFAHREN ZUM BETREIBEN EINES MAGNETISCH-INDUKTIVEN DURCHFLUSSMESSGERÄTS UND ENTSPRECHENDES MAGNETISCH-INDUKTIVES DURCHFLUSSMESSGERÄT**

(57)   Dargestellt und beschrieben ist ein Verfahren (1) zum Betreiben eines magnetisch-induktiven Durchflussmessgeräts (2), mit einem Messrohr (3) zum Führen eines elektrisch leitfähigen Mediums (4), mit einer Mehrzahl (n) von mit Erregungsströmen (Ii) separat bestrombaren Magnetfeldeinrichtungen (Mi, Mi') zur Erzeugung wenigstens eines das Messrohr (3) zumindest teilweise senkrecht zur Strömungsrichtung des Mediums (4) durchsetzenden Magnetfeldes, mit einer Mehrzahl an Messelektroden (Ei, Ei') zum Erfassen einer Mehrzahl (m) von in dem Medium induzierten Messspannungen (Ui), und mit einer Steuer- und Auswertevorrichtung (5) zur Erzeugung des Magnetfeldes durch Bestromung wenigstens einer der Magnetfeldeinrichtungen (Mi, Mi') und zur Berechnung des Volumenstroms des Mediums (4) durch das Messrohr (3).

Eine höhere Messgenauigkeit und eine bessere Robustheit gegen den Einfluss gestörter Strömungsprofile auf das Messergebnis wird dadurch erreicht, dass eine Mehrzahl der Magnetfeldeinrichtungen (Mi, Mi') mit einer Mehrzahl (n) von Erregungsströmen (Ii) beaufschlagt wird, dass eine Mehrzahl (m) von Messspannungen (Ui) erfasst wird, dass eine Mehrzahl von strömungsabhängigen Übertragungsfaktoren (Kij) aus den Erregungsströmen (Ii) und den durch die Erregungsströme (Ii) verursachten Messspannungen (Ui) bestimmt wird, wobei ein Übertragungsfaktor (Kij) das Verhältnis ist von dem durch einen Erregungsstrom (Ij) verursachten Anteil an einer Messspannung (Ui) zu der Höhe dieses Erregungsstroms (Ij), und berechnen des Volumenstroms des Mediums (4) aus einer Mehrzahl der bestimmten strömungsabhängigen Übertragungsfaktoren (Kij).

Fig. 1

**Beschreibung**

Die Erfindung betrifft ein Verfahren zum Betreiben eines magnetisch-induktiven Durchflussmessgeräts, mit einem Messrohr zum Führen eines elektrisch leitfähigen Mediums, mit einer Mehrzahl von mit Erregungsströmen separat bestrombaren Magnetfeldeinrichtungen zur Erzeugung wenigstens eines das Messrohr zumindest teilweise senkrecht zur Strömungsrichtung des Mediums durchsetzenden Magnetfeldes, mit einer Mehrzahl an Messelektroden zum Erfassen einer Mehrzahl von in dem Medium induzierten Messspannungen, und mit einer Steuer- und Auswertevorrichtung zur Erzeugung des Magnetfeldes durch Bestromung wenigstens einer der Magnetfeldeinrichtungen und zur Berechnung des Volumenstroms des Mediums durch das Messrohr. Darüber hinaus betrifft die Erfindung auch ein entsprechendes magnetisch-induktives Durchflussmessgerät.

Magnetisch-induktive Durchflussmessgeräte der vorgenannten Art und entsprechende Verfahren zum Betreiben dieser magnetisch-induktiven Durchflussmessgeräte sind seit Langem bekannt. Das Messprinzip beruht auf der Kraftwirkung auf bewegte Ladungsträger in einem Magnetfeld, wobei die Kraftwirkung proportional zur Geschwindigkeit der Ladungsträger ist. Durch die Trennung der Ladungsträger in dem elektrisch leitfähigen Medium wird eine von der Strömungsgeschwindigkeit abhängige elektrische Spannung in dem Medium induziert, die dann mit Messelektroden abgegriffen wird. Im Stand der Technik wird die induzierte Messspannung unmittelbar herangezogen, um die - über den Strömungsquerschnitt gemittelte - Strömungsgeschwindigkeit und damit den Volumenstrom des leitfähigen Mediums durch das Messrohr zu bestimmen.

Viele magnetisch-induktive Durchflussmessgeräte arbeiten nur mit einer einzigen Magnetfeldeinrichtung und üblicherweise mit nur einem Paar von Messelektroden zur Erfassung der induzierten Spannung. Es ist aber auch bekannt, mehrere Magnetfeldeinrichtungen und mehrere Messelektroden bzw. Messelektrodenpaare zu verwenden, wobei die Magnetfeldeinrichtungen dann sequenziell, also zeitlich nacheinander, bestromt werden und entsprechend zeitlich nacheinander entsprechende induzierte Messspannungen aufgenommen werden. Schließlich wird unmittelbar in Abhängigkeit von den erfassten Messspannungen der Volumenstrom berechnet.

Magnetisch-induktive Durchflussmessgeräte sind empfindlich gegenüber Veränderungen des Strömungsprofils. Eine Änderung des Strömungsprofils kann durch die Strömung selbst verursacht (zum Beispiel beim Übergang von laminarer zu turbulenter Strömung, also in Abhängigkeit von der Reynolds-Zahl), die Veränderung des Strömungsprofils kann aber auch durch externe Einflüsse verursacht werden, beispielsweise durch eine ungünstige Einbausituation des magnetisch-induktiven Durchflussmessgeräts, wie bei der Anordnung des magnetisch-induktiven Durchflussmessgeräts unmittelbar nach der Krümmung eines Rohrsystems, resultierend in einem gänzlich unsymmetrischen Strömungsprofil.

Zur Beschreibung der feldtheoretischen Zusammenhänge zwischen punktuell abgegriffenen Messspannungen, der magnetischen Feldverteilung im relevanten Volumen des Messrohrs, der Geschwindigkeitsverteilung des Mediums (Strömungsprofil) und der sich einstellenden induzierten elektrischen Feldverteilung sind systematische Überlegungen von Shercliff (und auch anderen) angestellt worden, aus denen der Begriff der sogenannten Gewichtsfunktion (weight-function) entstanden ist. Zur physikalischen Beschreibung der Vorgänge in einem magnetisch-induktiven Durchflussmessgerät wird danach die Elektrodenspannung berechnet durch ein Volumenintegral über den Innenraum des magnetisch-induktiven Durchflussmessgeräts, Integrand ist das Skalarprodukt aus der besagten Gewichtsfunktion und dem Geschwindigkeitsfeld der Strömung. Die ortsabhängige Gewichtsfunktion beschreibt also, inwieweit verschiedene Strömungselemente im Volumen des magnetisch-induktiven Durchflussmessgeräts zu der Messspannung beitragen. Je ortsveränderlicher die Gewichtsfunktion ist, desto empfindlicher ist die Durchflussmessung gegenüber einer Änderung des Strömungsprofils. Die Beschreibung der Zusammenhänge wird schnell aufwendig und lässt sich nur für idealisierte Annahmen hinsichtlich der Messrohrgeometrien, der Anordnung von Messelektroden und der magnetischen Feldverteilung geschlossen lösen. Der Ansatz der Gewichtsfunktion macht jedenfalls deutlich, dass über den Strömungsquerschnitt bzw. das Strömungsvolumen verteilte Geschwindigkeitskomponenten unterschiedlich hohe Beiträge zu der induzierten Messspannung leisten, sodass unterschiedliche Geschwindigkeitsprofile zu unterschiedlichen Messspannungen führen können bei gleichem gemittelten Volumendurchfluss.

Aufgabe der vorliegenden Erfindung ist es, ein Verfahren zum Betreiben eines magnetisch-induktiven Durchflussmessgeräts und ein solches magnetisch-induktives Durchflussmessgerät anzugeben, bei dem die Durchflussmessung eine geringere Abhängigkeit vom Strömungsprofil des elektrisch leitfähigen Mediums aufweist.

Die zuvor hergeleitete Aufgabe ist bei dem eingangs beschriebenen Verfahren zum Betreiben eines magnetisch-induktiven Durchflussmessgeräts dadurch gelöst, dass eine Mehrzahl der Magnetfeldeinrichtungen mit einer Mehrzahl von Erregungsströmen beaufschlagt wird, dass eine Mehrzahl von Messspannungen erfasst wird und dass eine Mehrzahl von strömungsabhängigen Übertragungsfaktoren aus den Erregungsströmen und den durch die Erregungsströme verursachten Messspannungen bestimmt wird. Ein Übertragungsfaktor ist dabei das Verhältnis von dem durch einen Erregungsstrom verursachten Anteil an einer Messspannung zu der Höhe dieses Erregungsstroms. Der Volumenstrom des Mediums wird dann aus einer Mehrzahl der bestimmten Übertragungsfaktoren berechnet.

Durch das erfindungsgemäße Verfahren wird ein erheblicher Zugewinn an Informationen über die physikalischen Zusammenhänge in dem magnetisch-induktiven Durchflussmessgerät und über die Strömungssituation in dem Messrohr gewonnen, jedenfalls gegenüber der Auswertung der Messspannungen zur Ermittlung des Volumenstroms. Wenn von einer Mehrzahl an Magnetfeldeinrichtungen die Rede ist, die mit einer Mehrzahl von Erregungsströmen beaufschlagt werden, dann ist damit gemeint, dass die verschiedenen Magnetfeldeinrichtungen auch unterschiedlich orientierte Magnetfelder im Messrohr erzeugen. Genauso ist das Verständnis von den mit der Mehrzahl an Messelektroden erfassten mehreren Messspannungen, die entlang verschieden orientierter Messpfade innerhalb des Messrohrs gemessen werden, wobei ein Messpfad im Wesentlichen bestimmt ist durch die gedachte Verbindungslinie zischen den an der Messung beteiligten Messelektroden.

Wenn beispielsweise davon ausgegangen wird, dass drei Magnetfeldeinrichtungen existieren, die von drei separat einstellbaren Erregungsströmen beaufschlagt werden, und dass zwei Messspannungen erfasst werden, dann stünden bei der konventionellen Bestimmung des Volumenstroms des Mediums zwei Messspannungen zur Verfügung, in denen sich die Durchflussinformationen niederschlagen. Bei dem erfindungsgemäßen Verfahren finden die Durchflussinformationen aber Niederschlag in 3*2 der strömungsabhängigen Übertragungsfaktoren, die ebenfalls Träger von Durchflussinformationen sind, aber eine deutlich höhere Auflösung haben als die lediglich zwei aufgenommenen Messspannungen. Mit dem erfindungsgemäßen Verfahren können bei dem Beispiel praktisch sechs Wirkzusammenhänge genutzt werden, während es bei dem konventionellen Verfahren nur zwei sind. Wenn U1 und U2 die Messspannungen sind und I1, I2, I3 die Erregungsströme der Magnetfeldeinrichtungen sind, dann ist der gleichungsmäßige Zusammenhang wie folgt (Gleichung 1):

$$U1 = K11*I1 + K12*I2 + K13*I3$$

$$U2 = K21*I1 + K22*I2 + K23*I3$$

Allgemeiner ausgedrückt, gibt es bei n Erregungsströmen der Magnetfeldeinrichtungen und bei m Messspannungen insgesamt m*n Übertragungsfaktoren K und damit m*n Wirkzusammenhänge. In Matrixschreibweise gilt dann also (Gleichung 2):

$$U = K * I.$$

U ist Spaltenvektor mit m Messspannungen U1, ..., Um; I ist Spaltenvektor mit den Komponenten I1, ..., In; K ist eine m*n-Matrix mit den Elementen K11, ..., Kmn. Im Folgenden wird zur Vereinfachung der Notation ein einfacher Großbuchstabe als Vektor oder Matrix aufgefasst. Wenn einem Buchstaben (oder einer Buchstabenfolge) eine Zahl oder ein allgemeiner Zähl-Index (i, j) folgt (zum Beispiel 12, Ij, Kmn), dann werden darunter entsprechend skalare Werte verstanden.

Die Übertragungsfaktoren geben also an, inwieweit ein Erregungsstrom sich auf eine bestimmte Messspannung auswirkt. Dieser Zusammenhang ist davon abhängig, wie die geometrischen Verhältnisse bei der Realisierung des magnetisch-induktiven Durchflussmessgeräts sind, insbesondere was für ein magnetisches Feld ein bestimmter Erregungsstrom erzeugt und wie die Messelektroden zum Magnetfeld angeordnet sind. Wenn eine Messspannung beispielsweise mit Messelektroden aufgenommen wird, die entlang einer Magnetfeldlinie angeordnet sind, dann hat der das Magnetfeld erzeugende Erregungsstrom praktisch keinen Einfluss auf die von diesen Elektroden aufgenommene Messspannung. Der gleiche Strom hat jedoch einen erheblichen Einfluss auf eine Messspannung, die mit Messelektroden aufgenommen wird, die senkrecht zu dem Verlauf des Magnetfelds angeordnet sind. Der entsprechende Übertragungsfaktor wird also naturgemäß recht groß sein. Das Beispiel macht deutlich, dass die Übertragungsfaktoren die Zusammenhänge in bestimmten Raumgebieten bzw. Strömungsquerschnitten innerhalb des Messrohrs des magnetisch-induktiven Messgeräts charakterisieren.

Der Übertragungsfaktor ist jedoch nicht nur eine von der Geometrie und den Feldverläufen abhängige Größe, sondern er hängt jeweils auch von dem zum Zeitpunkt der Messung herrschenden (lokalen) Volumendurchfluss und Strömungsprofil ab. Es ist vollkommen einleuchtend, dass der Beitrag eines Magnetfeld erregenden Erregungsstromes zu einer Messspannung natürlich größer ist, wenn eine große Strömungsgeschwindigkeit vorliegt und entsprechend eine stärkere Ladungstrennung erfolgt.

Grundsätzlich müssen also nach einer erfolgten Messung die strömungsabhängigen Übertragungsfaktoren Kij der Übertragungsfaktor-Matrix K gemäß Gleichung 2 bestimmt werden, sodass die Übertragungsfaktoren dann in die Berechnung des Volumenstroms einfließen können. Durch geschickte Verwendung der Übertragungsfaktoren zur Bestimmung des Volumenstroms kann die Empfindlichkeit der Messung hinsichtlich einer Änderung des Strömungsprofils erheblich reduziert werden und damit die Messgenauigkeit erhöht werden. Wenn man bei der Vorstellung der eingangs erläuterten Gewichtsfunktionen bleibt, dann stellt die Verknüpfung oder Überlagerung der Übertragungsfaktoren bei der Berechnung des Volumenstroms praktisch eine Überlagerung verschiedener Gewichtsfunktionen dar, deren Überlagerung über den Messquerschnitt des Messrohrs gesehen eine größere Uniformität bzw. Gleichförmigkeit über den Messquerschnitt aufweist, sodass die Empfindlichkeit gegenüber der Änderung des Strömungsprofils reduziert wird. Aus den Ausführungen ergibt sich, dass das Verfahren dann besonders vorteilhaft ist, wenn mehr Übertragungsfaktoren bestimmt werden, als Messspannungen (entlang verschiedener Messpfade) erfasst worden sind, und wenn mehr Übertragungsfaktoren zur Berechnung des Volumenstroms herangezogen werden als Messspannungen erfasst worden sind. In diesem Fall stellt sich der deutliche Zugewinn an Informationen gegenüber der bekannten alleinigen Nutzung der Messspannungen deutlich ein.

Bei einer bevorzugten Ausgestaltung des Verfahrens ist vorgesehen, dass mehrere der Mehrzahl von Magnetfeldeinrichtungen gleichzeitig mit einer Mehrzahl von Erregungsströmen beaufschlagt werden. Der Vorteil dieser Vorgehensweise liegt vor allem in der Verbesserung des Signal/Rausch-Verhältnisses, da die induzierten Messspannungen der Stärke des erregten Magnetfeldes bzw. der erregten Magnetfelder der mehreren Magnetfeldeinrichtungen abhängt. Es ist insgesamt darauf zu achten, dass die Magnetfeldeinrichtungen in einem linearen Bereich betrieben werden und nicht in die Sättigung geraten.

Eine bevorzugte Ausgestaltung des Verfahrens ist dadurch ausgezeichnet, dass der Volumenstrom des Mediums aus einer Linearkombination mehrerer der strömungsabhängigen Übertragungsfaktoren berechnet wird, wobei insbesondere die Übertragungsfaktoren Kij durch Wichtungsfaktoren Wij gewichtet werden (Gleichung 3):

$$\dot{V} = \sum_{i=1}^{m} \sum_{j=1}^{n} Wij * Kij$$

Die Wichtungsfaktoren Wij werden beispielsweise so gewählt, dass der Messfehler minimiert, insbesondere bei Änderungen des Strömungsprofils. Dazu können Kalibriermessungen mit variierendem, aber bekannten Volumendurchfluss durchgeführt werden. Um die geeignetste Wahl des linearen Zusammenhangs und/oder der Wichtungsfaktoren zu bestimmen, können die Wichtungsfaktoren und Zusammenhänge durch Optimierungsverfahren bestimmt werden, beispielsweise durch eine Monte-Carlo-Simulation (zufällige Variation der Wichtungsfaktoren), auch in Kombination mit einem Gradientenverfahren zur Fehlerminimierung. Anstelle von Kalibriermessungen kann das gesamte System, also das magnetisch-induktive Durchflussmessgerät mit den mehreren Magnetfeldeinrichtungen und den mehreren erfassten induzierten Messspannungen auch über ein entsprechendes numerisches Verfahren (Finite-Elemente-Methode, Boundary-Elemente-Methode usw.) simuliert werden. Durch entsprechende Lösung einer Optimierungsaufgabe anhand des numerischen Modells können dann Linearkombinationen mehrerer Übertragungsfaktoren mit geeigneter Gewichtung ermittelt werden, um einen Messfehler und die Abhängigkeit von veränderten Strömungsprofilen zu minimieren.

Bei einer alternativen Ausgestaltung des Verfahrens wird der Volumenstrom des Mediums mit einer nichtlinearen Funktion in mehreren der strömungsabhängigen Übertragungsfaktoren berechnet, insbesondere wobei die Übertragungsfaktoren in der nichtlinearen Funktion durch Wichtungsfaktoren gewichtet werden. Auch hier können die zuvor für den linearen Fall beschriebenen Auslegungsstrategien angewendet werden (Gleichung 4; i, j laufen von 1 bis m bzw. von 1 bis n):

$$\dot{V} = f(Kij)$$

Die Form des Strömungsprofils hängt, wie zuvor schon erwähnt, von der Reynolds-Zahl ab, die proportional zum Volumenstrom und umgekehrt proportional zur (kinematischen) Viskosität v ist. Aus diesem Grund ändert sich der verbleibende Nichtlinearitätsfehler bei Berechnung des Volumenstroms, der auch bei Verwendung mehrerer Magnetfeldeinrichtungen und/oder der Erfassung mehrerer Messspannungen gegeben ist, bei Verwendung eines nichtlinearen Zusammenhangs (Gleichung 4), wenn sich die (kinematische) Viskosität (der strömenden Flüssigkeit) ändert. Um dieses Problem zu bewältigen, werden bei einer bevorzugten Ausgestaltung des Verfahrens zunächst normierte Übertragungsfaktoren berechnet unter Verwendung der bekannten oder gemessenen (kinematischen) Viskosität v des Mediums (Gleichung 5):

$$Kij,norm = Kij/v$$

In einem weiteren Schritt werden die normierten Übertragungsfaktoren Kij,norm nichtlinear mithilfe einer nichtlinearen Funktion g auf einen Schätzwert für eine (Gesamt-)Reynolds-Zahl abgebildet. Schließlich wird der Volumenstrom daraus geschätzt, unter Berücksichtigung der (kinematischen) Viskosität v der strömenden Flüssigkeit (Gleichung 6):

$$\dot{V} = v * g(Kij, norm)$$

Bei Verwendung eines linearen Zusammenhangs der Übertragungsfaktoren erzielte diese Vorgehensweise keinen Vorteil, sie führte nur zu einem überflüssigen Rechenaufwand (sich exakt aufhebende Division durch die kinematische Viskosität und nachfolgende Multiplikation mit der kinematischen Viskosität). Bei Verwendung des nichtlinearen Zusammenhangs g in den normierten Übertragungsfaktoren ist die Vorgehensweise jedoch vorteilhaft.

Bei einer Weiterbildung der zuvor genannten Ausgestaltung des Verfahrens ist vorgesehen, dass die nicht lineare Funktion durch ein künstliches neuronales Netzwerk gebildet wird mit einer Eingangsschicht mit wenigstens einer Anzahl an Eingangsneuronen entsprechend der Anzahl der verwendeten Übertragungsfaktoren als Eingangsgrößen, mit einer Ausgangsschicht mit wenigstens einem Ausgangsneuron zur Ausgabe zumindest des Volumenstroms des Mediums als Ausgangsgröße und mit zumindest einer Zwischenschicht mit wenigstens zwei Neuronen, insbesondere wobei das künstliche neuronale Netzwerk mit Kalibrierdaten trainiert wird. Die Kalibrierdaten können von realen Kalibriermessungen stammen, sie können aber auch aus entsprechenden numerischen Simulationen stammen, sofern diese vorliegen.

Gemäß einer bevorzugten Weiterbildung des Verfahrens wird nur eine bestimmte Anzahl oder ein bestimmter Prozentsatz der höchstwertigen Übertragungsfaktoren zur Bestimmung des Volumenstroms verwendet oder es werden nur Übertragungsfaktoren zur Bestimmung des Volumenstroms verwendet, die über einem bestimmten Grenzwert liegen, wobei der Grenzwert insbesondere ein bestimmter Prozentwert vom Wertebereich aller Übertragungsfaktoren ist. Die genannten Vorgehensweisen sind insgesamt dazu geeignet, das Signal/Rausch-Verhältnis zu verbessern, da Übertragungsfaktoren mit einem großen Rauschanteil unberücksichtigt bleiben können.

Das Verfahren zum Betreiben eines magnetisch-induktiven Durchflussmessgeräts kann auch so ausgelegt sein, dass der Einfluss mancher Erregungsströme auf manche induzierten Messspannungen gewünscht ist und der Einfluss auf wiederum andere Messspannungen eher unerwünscht und unbeabsichtigt ist. In diesem Fall würden also diejenigen Übertragungsfaktoren in die Berechnung des Volumenstroms eingehen, die eine zu berücksichtigende Abhängigkeit von Erregungsstrom und induzierter Messspannung beschreiben, wohingegen Übertragungsfaktoren, die unerwünschte Zusammenhänge beschreiben, außer Acht gelassen werden bzw. überhaupt nicht berechnet werden.

Bei einer bevorzugten Ausgestaltung des Verfahrens werden zur Ermittlung des Volumenstroms n Magnetfeldeinrichtungen mit n Erregungsströmen beströmt und es werden m Messspannungen erfasst und m*n Übertragungsfaktoren bestimmt. Dabei entsteht ein Gleichungssystem mit m*n Übertragungsfaktoren, wie es schon anhand von Gleichung 2 beschrieben worden ist. Jede Zeile des Gleichungssystems weist n Unbekannte auf, nämlich n Übertragungsfaktoren. Für die erste Messspannung stellt sich die Situation beispielsweise wie folgt dar (Gleichung 7):

$$U1 = K11*I1 + K12*I2 + ... + K1n*In$$

Gleichung 7 ist mit einem Satz an Erregungsströmen I1, I2, ..., In unterbestimmt, die Übertragungsfaktoren K11, ..., K1n lassen sich mit einem Satz von Erregungsströmen nicht eindeutig bestimmen. Für eine eindeutige Bestimmung sind vielmehr n Messzyklen mit n linear unabhängigen Erregungsstromvektoren Iv1, ..., Ivn erforderlich. Bei einer bevorzugten Ausgestaltung des zuvor genannten Verfahrens ist deshalb vorgesehen, dass in n zeitlich hintereinander ausgeführten Messzyklen mit n linear unabhängigen Erregungsstromvektoren Iv1, Iv2, ..., Ivn mit jeweils den Erregungsströmen I1, I2, ..., In die Magnetfeldeinrichtungen bestromt werden, wobei insbesondere in einem Messzyklus die Magnetfeldeinrichtungen, die einen von null verschiedenen Erregungsstrom aufweisen, gleichzeitig bestromt werden. In jedem der n Messzyklen werden auch die resultierenden induzierten Messspannungen erfasst. So werden für jede Messspannung n Gleichungen mit n Unbekannten erhalten, sodass ein lösbares Gleichungssystem für die n Unbekannten, also die n unbekannten Übertragungsfaktoren für jeweils eine Messspannung, entsteht. Die in jedem Messzyklus erhaltenen induzierten Messspannungen bilden jeweils einen Messspannungsvektor Uv1, Uv2, ..., Uvn. Insgesamt bilden die Erregungsstromvektoren Iv1, Iv2, ..., Ivn eine Erregungsstrommatrix Iv der Dimension n*n und die Messspannungsvektoren Uv1, Uv2, ..., Uvn bilden die Messspannungsmatrix Uv mit der Dimension m*n. Der Zusammenhang ist also wie folgt, wobei die Dimensionen der Größen in runde Klammern gesetzt sind (Gleichung 8):

$$U(m*n) = K(m*n) * I(n*n).$$

Ausgedrückt mit den oben beschriebenen Erregungsstromvektoren Ivi und den Messspannungsvektoren Uvi ergibt sich (Gleichung 9):

$$[Uv1, Uv2,..., Uvn] = K(m*n) * [Iv1, Iv2, ..., Ivn].$$

Im Allgemeinfall muss zur Lösung des Gleichungssystems die Inverse der Erregungsstrommatrix gebildet werden, wobei sich nach Rechtsmultiplikation von Gleichung 6 mit der Inversen der Erregungsstrommatrix I dann sofort die Übertragungsfaktormatrix K mit den Übertragungsfaktoren Kij ergibt (Gleichung 10):

$$U * I^{-1} = K * I * I^{-1} = K.$$

Bei einer Ausgestaltung des Verfahrens ist vorgesehen, dass in einem Messzyklus genau ein Erregungsstrom von null verschieden ist (alle anderen Erregungsströme sind also gleich null), sodass in einem Messzyklus sofort n Übertragungsfaktoren bestimmt werden können. Durch diese Vorgehensweise muss kein Gleichungssystem gelöst werden bzw. muss nicht die Inverse der Erregungsstrommatrix berechnet werden. Allerdings können dann nicht mehrere Erregungsströme gleichzeitig zur Anwendung kommen, was sich möglicherweise nachteilig auf das Signal/Rausch-Verhältnis auswirkt.

Bei einer bevorzugten Ausgestaltung des Verfahrens wird eine Optimalfilterung der Messspannungen realisiert, in dem die Erregungsströme in den Erregungsstromvektoren zunächst so gewählt werden, dass eine aus den Erregungsstromvektoren als Zeilenvektoren oder Spaltenvektoren gebildete Erregungsstrommatrix orthogonal, also invertierbar, ist, insbesondere wobei die in den Messzyklen erfassten Messspannungen kreuzkorreliert werden mit den Erregungsströmen (matched filter). Auch durch diese Maßnahme ist eine Verbesserung des Signal/Rausch-Verhältnisses erzielbar.

Es gibt verschiedene Wege, Anregungschemata für die Erregungsströme Ij zu finden, sodass linear unabhängige Erregungsstromvektoren Ivj und damit invertierbare Erregungsstrommatrizen I resultieren.

In diesem Zusammenhang sieht eine bevorzugte Ausgestaltung des Verfahrens zum Betreiben eines magnetisch-induktiven Durchflussmessgeräts vor, dass die Erregungsströme I1, I2, ..., In in den Erregungsstromvektoren Ivj so gewählt werden, dass eine aus den Erregungsstromvektoren Ivj als Zeilenvektoren oder Spaltenvektoren gebildete Erregungsstrommatrix I orthogonal (und damit zwingend invertierbar) ist, wobei die Erregungsstrommatrix I durch eine Householder-Transformation eines frei gewählten Erregungsstromvektors Ivi erhalten wird. Insbesondere wird solchen resultierenden Erregungsstrommatrizen I der Vorzug gegeben, die eine geringe Varianz in den Werten der Matrixelemente haben. Dieses Kriterium zielt darauf ab, dass sehr unterschiedliche hohe Anregungsströme insgesamt zu einem schlechteren Signal/Rausch-Verhältnis des Ergebnisses führen als dies bei Verwendung von Erregungsströmen mit ähnlich hoher Amplitude der Fall ist. Numerisch betrachtet, besteht hier ein Zusammenhang zur Kondition der Erregungsstrommatrix.

Bei einer bevorzugten Ausgestaltung des Verfahrens wird ein Anregungsschema verwendet, dass eine Binäranregung realisiert: Die von null verschiedenen Erregungsströme in den Erregungsstromvektoren haben eine gleiche Amplitude, insbesondere werden die im Betrieb des magnetisch-induktiven Durchflussmessgeräts maximal vorgesehenen Amplituden verwendet, um ein optimales Signal/Rausch-Verhältnis zu erzielen. Mit solchen Erregungsstromvektoren lassen sich orthogonale Erregungsstrommatrizen nur bei einer geraden Anzahl von Erregungsströmen realisieren.

In einer weiteren bevorzugten Ausgestaltung der Binäranregung wird mit einer Zweierpotenz von Erregerströmen gearbeitet. In diesem Fall wird eine orthogonale Erregerstrommatrix I, die die Orthogonalitätsbedingung erfüllt, systematisch erzeugt, indem der Codebaum eines Orthogonal Variable Spreading Factor (OVSF ) Codes verwendet wird. Dazu wird zunächst ein OVSF-Codebaum mit der gewünschten Länge n (Anzahl - Zweierpotenz - der Erregerströme) erzeugt. Danach werden die n verschiedenen binären OVSF-Codes mit den Elementen { -1, + 1} an den Verzweigungen des Codebaums spaltenweise (oder zeilenweise) als Elemente einer Matrix mit der Größe (m*n) angeordnet. Dies geschieht mit einem Code nach dem anderen in der Weise, dass (nach Multiplikation der Matrix mit einem konstanten Strom) eine symmetrische Erregerstrommatrix I erhalten wird. Eine binäre und orthogonale Erregerstrommatrix I, wie sie vorstehend abgeleitet worden ist, ist eine bevorzugte Realisierung für die vorgeschlagene simultane Anregung der Magnetfeldeinrichtungen des magnetisch-induktiven Durchflussmessgeräts. Vorteilhaft ist auch hier die Optimierung des Signal-Rausch-Verhältnisses durch gleichzeitige Anregung mehrerer Magnetfeldeinrichtungen (oder sogar aller Magnetfeldeinrichtungen) mit der gleichen betragsmäßigen Amplitude des Erregungsstroms.

Da in den vorstehenden Ausführungsbeispielen häufig von orthogonalen Erregerstrommatrizen I die Rede war, wird abschließend nochmals darauf hingewiesen, dass natürlich auch nicht-orthogonale Erregungsstrommatrizen verwendet werden können, die Matrizen müssen nur invertierbar sein. Die vorgestellten Ausführungsbeispiele stellen jedoch in verschiedener Hinsicht optimale Realisierungen dar.

Die mit den Messelektroden erfassten Messspannungen Ui beruhen in der Realität nicht nur auf der Induktionswirkung des Magnetfeldes, vielmehr gehen hier auch elektrochemische Spannungsanteile Uch,i und auch Rauschanteile Un,i ein. Hier sollen nur die elektrochemischen Spannungsanteile Uch,i berücksichtigt werden. Wenn dies geschieht, dann lautet Gleichung 2 in einer Erweiterung wie folgt (Gleichung 11):

$$U = K * I + Uch.$$

Uch ist der elektrochemische Spannungsvektor der elektrochemischen Spannungen Uch,i an den Messelektroden, die die Messspannung Ui erfassen. Diese elektrochemischen Spannungen sind zeitlich nur sehr langsam veränderlich, jedenfalls im Vergleich zu den mit magnetisch-induktiven Durchflussmessgeräten realisierten Messfrequenzen.

Bei einer vorteilhaften Ausgestaltung des Verfahrens werden die elektrochemischen Spannungsanteile (Uch1, Uch2, ..., Uchn) an den Messspannungen (U1, U2, ..., Un) ermittelt und es werden bereinigte Messspannungen U' berechnet durch Subtraktion der elektrochemischen Spannungsanteile (Uch1, Uch2, ..., Uchn) von den Messspannungen (U1, U2, ..., Un) und wobei das zuvor dargestellte Verfahren dann mit den bereinigten Messspannungen durchgeführt wird, also (Gleichung 12):

$$U' = U - Uch = K * I.$$

Die elektrochemischen Spannungsanteile Uch können über separate Messungen bestimmt werden, beispielsweise über eine Subtraktionsmessung unter Annahme unveränderlicher elektrochemischer Spannungen zwischen den Zeitpunkten der Messungen.

Die zuvor hergeleitete Aufgabe wird ebenfalls gelöst durch das hier mehrfach beschriebene magnetisch-induktive Durchflussmessgerät, wobei das magnetisch-induktive Durchflussmessgerät, insbesondere die Steuer und Auswertevorrichtung des magnetisch-induktiven Durchflussmessgeräts, so ausgestaltet ist, dass im Betrieb des magnetisch-induktiven Durchflussmessgeräts das zuvor beschriebene Verfahren ausgeführt wird.

Eine bevorzugte Ausgestaltung des magnetisch-induktiven Durchflussmessgeräts zeichnet sich dadurch aus, dass mindestens so viel Erregungsstromquellen vorhanden sind, wie verschiedene Erregungsströme zur Beaufschlagung der Magnetfeldeinrichtungen erforderlich sind, sodass die Magnetfeldeinrichtungen gleichzeitig mit einem Erregungsstrom beaufschlagbar sind. Diese Ausgestaltung hat den Vorteil, dass ein Messzyklus, also die Anregung der Magnetfeldeinrichtungen mit einem Erregungsstromvektor in kürzest möglicher Zeit ausführbar ist. Dadurch ist auch ein bestmögliches Signal-Rausch-Verhältnis erzielbar.

Bei einer alternativen Ausgestaltung des magnetisch-induktiven Durchflussmessgeräts sind weniger Erregungsstromquellen vorhanden, als verschiedene Erregungsströme zur Beaufschlagung der Magnetfeldeinrichtungen erforderlich sind. Die Erregungsstromquellen werden mit einer Demultiplexeranordnung sequenziell auf die Magnetfeldeinrichtungen geschaltet, sodass die Magnetfeldeinrichtungen zeitlich hintereinander oder zum Teil gleichzeitig und zum Teil zeitlich hintereinander mit einem Erregungsstrom beaufschlagbar sind. Bei dieser Ausgestaltung werden weniger Erregungsstromquellen benötigt als in dem zuvor dargestellten Ausführungsbeispiel, dafür wird mehr Zeit benötigt, um die Anregungsschemata in Form der verschiedenen Erregungsstromvektoren auszuführen.

Bei einer vorteilhaften Ausgestaltung des magnetisch-induktiven Durchflussmessgeräts sind mindestens so viel Spannungsmessvorrichtungen vorhanden, wie verschiedene zu erfassende Messspannungen erfasst werden, sodass die Messspannungen gleichzeitig erfassbar sind. Auch hier liegt der Vorteil in der schnellen Erfassung aller Messspannungen bei gleichzeitig hohem gerätetechnischen Aufwand.

Alternativ zu der vorigen Ausgestaltung sind bei dem magnetisch-induktiven Durchflussmessgerät weniger Spannungsmessvorrichtungen realisiert, als verschiedene Messspannungen vorhanden sind, und die Spannungsmessvorrichtungen werden mit einer Multiplexeranordnung sequenziell auf die Messelektroden geschaltet, sodass die Messspannungen zeitlich hintereinander oder zum Teil gleichzeitig und zum Teil zeitlich hintereinander erfassbar sind. Dadurch lassen sich der gerätetechnische Aufwand und damit auch die durch die schaltungstechnische Realisierung verursachten Kosten erheblich dämpfen.

Im Einzelnen gibt es nun eine Vielzahl von Möglichkeiten, das erfindungsgemäße Verfahren zum Betrieb eines magnetisch-induktiven Durchflussmessgeräts und das entsprechende magnetisch-induktive Durchflussmessgerät auszugestalten und weiterzubilden. Dazu wird verwiesen einerseits auf die den unabhängigen Patentansprüchen nachgeordneten Patentansprüche, andererseits auf die folgende Beschreibung von Ausführungsbeispielen in Verbindung mit der Zeichnung. In der Zeichnung zeigen

Fig. 1    schematisch ein Verfahren zum Betreiben eines magnetisch-in-duktiven Durchflussmessgeräts und ein entsprechendes magnet-isch-induktives Durchflussmessgerät mit zwei Magnetfeldein-richtungen und zwei zu erfassenden Messspannungen,

Fig. 2.     schematisch ein Verfahren zum Betreiben eines magnetisch-in-duktiven Durchflussmessgeräts und ein entsprechendes magnet-isch-induktives Durchflussmessgerät mit drei Magnetfeldein-richtungen und drei zu erfassenden Messspannungen,

Fig. 3     schematisch ein Verfahren zum Betreiben eines magnetisch-in-duktiven Durchflussmessgeräts und ein entsprechendes magnet-isch-induktives Durchflussmessgerät mit einer gerätetechnis-chen Ausstattung für eine einschrittige Anregung und Messung in einem Messzyklus und

Fig. 4     schematisch ein Verfahren zum Betreiben eines magnetisch-in-duktiven Durchflussmessgeräts und ein entsprechendes magnet-isch-induktives Durchflussmessgerät mit einer gerätetechnis-chen Ausstattung für eine mehrschrittige Anregung und Mes-sung in einem Messzyklus.

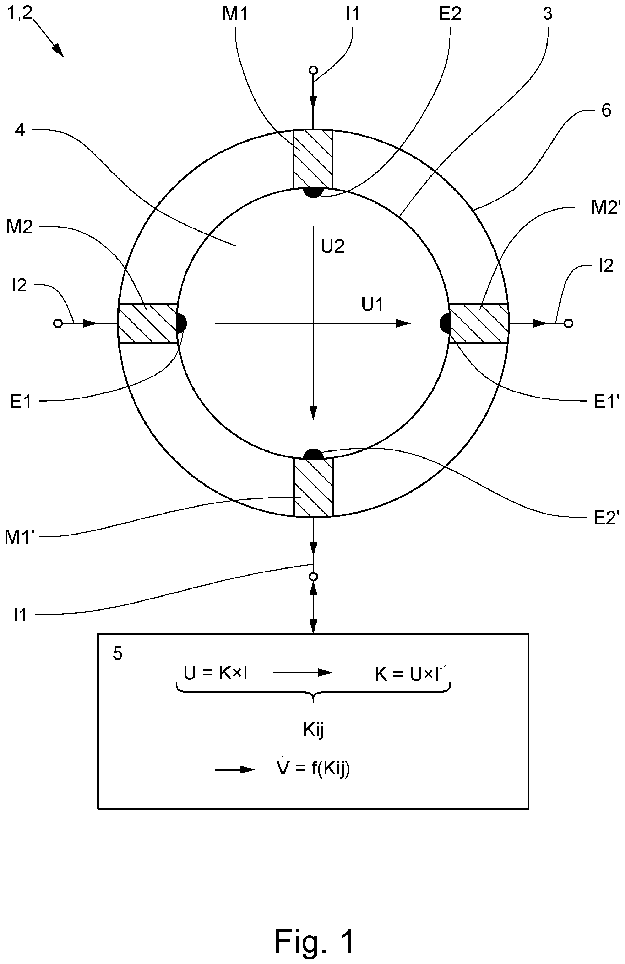

Die Fig. 1 bis 4 zeigen verschiedene Aspekte eines Verfahrens 1 zum Betreiben eines magnetisch-induktiven Durchflussmessgeräts 2 und entsprechende magnetisch-induktive Durchflussmessgeräte 2. In den Figuren werden als Bezugszeichen sowohl Zahlen als auch Buchstaben verwendet. Die Buchstaben haben größtenteils nur den Charakter von Bezugszeichen, sie erleichtern das Verständnis und die Herstellung des Zusammenhangs von Beschreibung und Zeichnung aber ganz erheblich. Teilweise haben die Bezugszeichen zusätzlich auch den Charakter von Formelzeichen, wobei die Formelzeichen beispielsweise in den Ansprüchen hilfreich sind zum Verständnis der Ansprüche, sie sind aber nicht notwendig für das Verständnis. Insoweit sind die Buchstaben-Bezugszeichen wie auch Formelzeichen in den Ansprüchen in Klammern gesetzt und werden auch in der nachfolgenden Figurenbeschreibung wie Bezugszeichen behandelt.

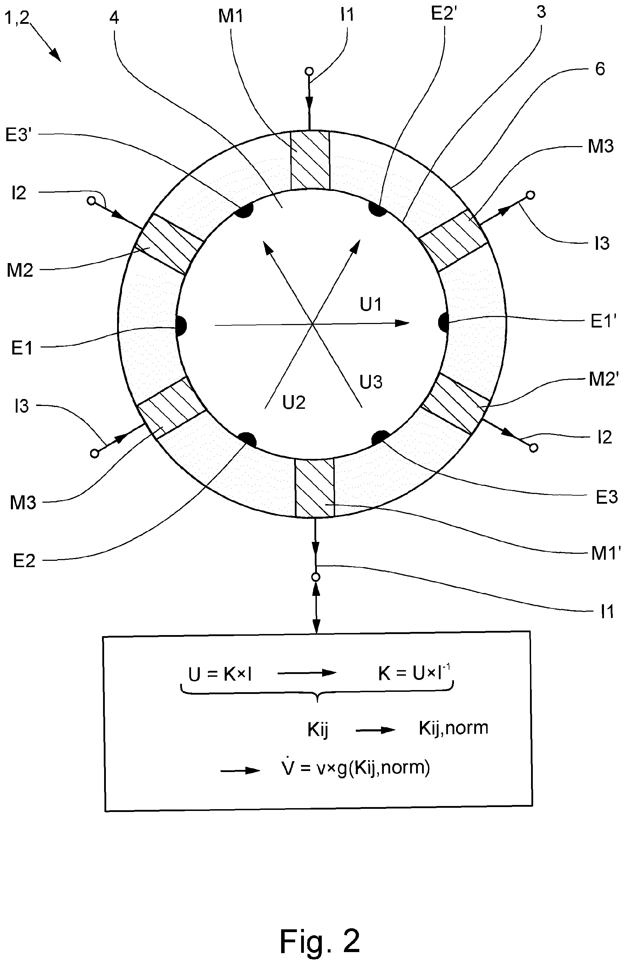

In den Figuren 1 und 2 sind schematisch strukturelle Komponenten der hier betrachteten magnetisch-induktiven Durchflussmessgeräte dargestellt. Die Durchflussmessgeräte 2 weisen ein Messrohr 3 zum Führen eines elektrisch leitfähigen Mediums 4 auf. Es sind eine Mehrzahl von mit Erregungsströmen Ii separat bestrombare Magnetfeldeinrichtungen Mi, Mi' zur Erzeugung wenigstens eines das Messrohr 3 zumindest teilweise senkrecht zur Strömungsrichtung des Mediums 4 durchsetzenden Magnetfeldes vorhanden. Ferner ist eine Mehrzahl an Messelektroden Ei, Ei' zum Erfassen einer Mehrzahl m von in dem Medium 4 induzierten Messspannungen Ui realisiert. In allen Figuren ist dargestellt, dass die magnetisch-induktiven Durchflussmessgeräte 2 auch jeweils eine Steuer- und Auswertevorrichtung 5 umfassen, die unter anderem der Erzeugung des Magnetfeldes durch Bestromung wenigstens einer der Magnetfeldeinrichtungen Mi, Mi' und zur Berechnung des Volumenstroms des Mediums 4 durch das Messrohr 3 dient.

Das magnetisch-induktive Durchflussmessgerät 2 gemäß Fig. 1 weist zwei Magnetfeldeinrichtungen M1, M1' und M2, M2' auf, die jeweils aus einem sich am Umfang des Messrohres 3 gegenüberliegenden Spulenpaar bestehen. Es ist angedeutet, dass das Spulenpaar M1, M1' von einem identischen Erregungsstrom I1 beaufschlagt wird, weshalb das Spulenpaar eine einzige Magnetfeldeinrichtung M1, M1' darstellt. Das gleiche gilt sinngemäß für die Magnetfeldeinrichtung M2, M2' mit den sich am Umfang des Messrohrs 3 gegenüberliegenden Spulen M2 und M2', die ebenfalls von einem identischen Erregungsstrom I2 beaufschlagt werden und demzufolge als eine einzige Magnetfeldeinrichtung M2, M2' aufzufassen sind. Mithilfe eines äußeren Rings 6 wird der Magnetkreis bzw. werden die Magnetkreise gezielt geschlossen. Das von den Magnetfeldeinrichtungen Mi, Mi' erzeugte Magnetfeld verläuft also zwischen den Teilen der Magnetfeldeinrichtung Mi, Mi' im Innenraum des Messrohrs 3 und wird dann über den äußeren Ring 6 geschlossen. Es sind ohne Weiteres andere Lösungen denkbar, beispielsweise mit segmentierten Elementen zum schließen auch voneinander unabhängiger Magnetkreise, dies ist jedoch für die vorliegende Erfindung nicht von Bedeutung. Das magnetisch-induktive Durchflussmessgerät gemäß Fig. 1 weißt 4 Messelektroden E1, E1', E2, E2' auf. Jeweils 2 Elektroden werden zum Erfassen einer induzierten Messspannung verwendet. Mit den Elektroden E1, E1' wird die Messspannung U1 erfasst, und mit den Elektroden E2, E2' wird die Messspannungen U2 erfasst.

Das hier betrachtete Verfahren 1 zum Betreiben des magnetisch-induktiven Durchflussmessgeräts 2 und das entsprechend ausgestaltete magnetisch-induktive Durchflussmessgerät 2, das im Betrieb das besagte Verfahren 1 durchführt, zeichnen sich dadurch aus, dass eine Mehrzahl der Magnetfeldeinrichtungen Mi, Mi' mit einer Mehrzahl n von Erregungsströmen Ii beaufschlagt wird, dass eine Mehrzahl m von Messspannungen Ui erfasst wird und dass eine Mehrzahl von strömungsabhängigen Übertragungsfaktoren Kij aus den Erregungsströmen Ii und den durch die Erregungsströme Ii verursachten Messspannungen Ui bestimmt wird. Dabei ist ein Übertragungsfaktor Kij das Verhältnis von dem durch einen Erregungsstrom Ij verursachten Anteil an einer Messspannung Ui zu der Höhe dieses Erregungsstroms Ij. Schließlich wird der Volumenstrom (in den Figuren V-Punkt) des Mediums 4 in dem Messrohr 3 aus einer Mehrzahl der bestimmten strömungsabhängigen Übertragungsfaktoren Kij berechnet.

Für das Ausführungsbeispiel von Fig. 1 mit zwei Magnetfeldeinrichtungen M1, M1' und M2, M2', die von zwei separaten Erregungsströmen I1, I2 bestromt werden, und bei der zwei Messspannungen U1, U2 messtechnisch aufgenommen werden, ergeben sich vier Wirkzusammenhänge, nämlich der Einfluss des Erregungsstroms I1 auf die Messspannungen U1 und U2 und auch die Auswirkungen des Erregungsstroms I2 auf die Messspannungen U1 und U2. Gleichungsmäßig ausgedrückt, ist dies also der Zusammenhang (ähnlich wie in Gleichung 1 weiter oben schon darge-

stellt), Gleichung 13:

$$U1 = K11{*}I1 + K12{*}I2$$

$$U2 = K21{*}I1 + K22{*}I2.$$

Hierin kommt die tatsächliche Gegebenheit klar zum Ausdruck, dass beide Erregungsströmen I1 und I2 einen Beitrag zu den Messspannungen U1 und U2 liefern. Dieser Beitrag hängt konstruktiv von der Realisierung des magnetisch-induktiven Durchflussmessgeräts 2 ab, also von der Anordnung der Magnetfeldeinrichtungen Mi zu den Messelektroden Ei, der Beitrag hängt aber auch von den tatsächlichen Strömungsgegebenheiten in dem Messrohr 3 des magnetisch-induktiven Durchflussmessgeräts 2 ab, lokal gewichtet von dem Magnetfeld, das durch den jeweiligen Erregungsstrom Ii im Messrohrvolumen erzeugt wird, und von der diesbezüglichen Position der Messelektroden Mi. Die Übertragungsfaktoren Kij sind damit Träger von weitreichenden physikalischen Informationen über das Strömungsgeschehen in dem Messrohr 3.

Während im Stand der Technik lediglich die Messspannungen U1, U2 herangezogen werden, um den Volumenstrom durch das Messrohr 3 zu bestimmen, stehen für die Bestimmung des Volumenstroms nach dem hier vorgestellten Verfahren 1 nicht nur zwei, sondern vier Informationen, nämlich die vier Übertragungsfaktoren K11, K12, K21, K22 zur Verfügung, die das Strömungsgeschehen in dem Messrohr 3 weitaus differenzierter beschreiben. Da die Erregungsströme I1, I2 vorgegeben sind, also im Einflussbereich des Betreibers des magnetisch-induktiven Durchflussmessgeräts 2 stehen, und die Messspannungen U1, U2 definitionsgemäß Messgrößen darstellen, sind die Übertragungsfaktoren Kij grundsätzlich bestimmbar. Dazu müssen so viele (voneinander unabhängige) Messungen mit entsprechenden Erregungsströmen durchgeführt werden, sodass eine Bestimmung der Übertragungsfaktoren Kij eindeutig möglich ist. Die in dem Beispiel gemäß Fig. 1 vier Strömungsinformationen Kij werden erfindungsgemäß verwendet, um den Volumenstrom zu berechnen. Im Stand der Technik würde der Volumenstrom nur mit den zwei Messspannungen U1, U2 berechnet werden. Die Informationsvielfalt eröffnet die Möglichkeit, den Volumenstrom deutlich robuster und genauer zu bestimmen, insbesondere beim Vorliegen von Änderungen des Strömungsprofils.

Das in seinen Grundzügen beschriebene Verfahren 1 zum Betreiben eines magnetisch-induktiven Durchflussmessgeräts 2 ist genauso anwendbar auf die in Fig. 2 dargestellte Ausgestaltung eines magnetisch-induktiven Durchflussmessgeräts 2. Hier sind insgesamt drei separat bestrombare Magnetfeldeinrichtungen M1 und M1', M2 und M2', M3 und M3' realisiert. Auch hier besteht jeweils eine Magnetfeldeinrichtung Mi, Mi' aus zwei am Umfang des Messrohrs 3 gegenüberliegenden Spulen, die mit einem identischen Erregungsstrom I1, I2, I3 bestromt werden. Die Messelektroden Ei, Ei' sind versetzt angeordnet zu den Positionen der Magnetfeldeinrichtungen Mi, Mi'. Die Messelektroden E1, E1' nehmen die Messspannung U1 auf, die Messelektroden E2, E2', nehmen die Messspannung U2 auf und die Messelektroden E3, E3' nehmen die Messspannung U3 auf. Die drei Erregungsströme I1, I2, I3 beeinflussen jeweils die Messspannungen U1, U2, U3. Gleichungsmäßig ausgedrückt besteht hier der Zusammenhang (Gleichung):

$$U1 = K11{*}I1 + K12{*}I2 + K13{*}I3$$

$$U2 = K21{*}I1 + K22{*}I2 + K23{*}I3$$

$$U3 = K31{*}I1 + K22{*}I2 + K33{*}I3.$$

In diesem Beispiel gibt es also neun Wirkzusammenhänge in Form der Übertragungsfaktoren Kij zwischen den Erregungsströmen Ii und den Messspannungen Ui. Der Volumenstrom durch das Messrohr 3 wird hier mit einer Mehrzahl der Übertragungsfaktoren Kij berechnet, maximal also mit neun Übertragungsfaktoren, die die strömungstechnischen Gegebenheiten in dem Messrohr 3 des magnetisch-induktiven Durchflussmessgeräts 2 beschreiben. Auch hier besteht ein deutlicher informativer Vorteil gegenüber der ausschließlichen Nutzung der Messspannungen U1, U2 und U3.

An dieser Stelle wird darauf hingewiesen, dass mit den sechs Spulen M1, M1', M2, M2' und M3, M3' deutlich mehr Magnetfeldeinrichtungen Mi realisiert werden könnten, als in diesem Ausführungsbeispiel angegeben sind. Entscheidend ist die Bestrombarkeit mit separaten Erregungsströmen Ii der Anordnungen. Eine weitere Magnetfeldeinrichtung könnte beispielsweise bestehen in der Konfiguration der Spulen M1, M2 und M1', M2', die mit einem gemeinsamen Erregungsstrom Ii bestromt werden könnten und so ein intermediäres Magnetfeld mit einer Hauptrichtung zwischen den Elektroden E3, E3' erzeugten. Bei den Magnetfeldeinrichtungen Mi kommt es also auf deren separate Bestrombarkeit an.

In den dargestellten Ausführungsbeispielen werden mehrere der Mehrzahl von Magnetfeldeinrichtungen Mi gleichzeitig mit einer Mehrzahl der Erregungsströme Ii beaufschlagt. Der Vorteil besteht darin, dass der Anteil des Nutzsignals in den Messspannungen Ui stärker wird gegenüber möglichen Störeinflüssen, die gegeben sind beispielsweise durch elektrochemische Spannungen und durch immer vorhandene Rauschspannungen. Dadurch wird im Ergebnis das Rausch/Stör-Verhältnis der Messung verbessert. Es ist darauf zu achten, dass das System insgesamt in einem linearen Bereich betrieben wird, insbesondere also das Magnetkreissystem nicht in einen Sättigungsbereich kommt.

Bei dem Ausführungsbeispiel gemäß Fig. 1 wird der Volumenstrom des Mediums 4 aus einer Linearkombination mehrerer der strömungsabhängigen Übertragungsfaktoren Kij berechnet, wobei die Übertragungsfaktoren Kij durch Wichtungsfaktoren Wij gewichtet werden, siehe Gleichung 3. Dadurch kann dem Umstand Rechnung getragen werden, dass der Erregungsstrom I1 einen bedeutsameren Beitrag zu der Messspannung U1 beiträgt als zu der Messspannung U2. Entsprechendes gilt für den Erregungsstrom I2, der bedeutsamer ist für die Messspannung U2 als für die Messspannung U1.

Bei dem Ausführungsbeispiel gemäß Fig. 2 wird der Volumenstrom des Mediums 4 mit einer nichtlinearen Funktion f in mehreren der strömungsabhängigen Übertragungsfaktoren Kij berechnet, wobei die Übertragungsfaktoren Kij in der nichtlinearen Funktion durch Wichtungsfaktoren Wij gewichtet werden, siehe Gleichung 4. In einer Weiterbildung des Ausführungsbeispiels gemäß Fig. 2 ist zusätzlich realisiert, dass normierte Übertragungsfaktoren Kij berechnet werden unter Verwendung der bekannten oder gemessenen kinematischen Viskosität v des Mediums 4. Die normierten Übertragungsfaktoren (Kij,norm = Kij/v)) werden nichtlinear mithilfe einer nichtlinearen Funktion g auf einen Schätzwert für eine Gesamt-Reynolds-Zahl abgebildet, wobei der Volumenstrom dann unter Verwendung der Funktion g berechnet wird unter Berücksichtigung der kinematischen Viskosität v des strömenden Mediums (siehe Gleichung 6 und Fig. 2).

Bei dem Ausführungsbeispiel gemäß Fig. 2 ist bei dem Verfahren 1 implementiert, dass nur ein bestimmter Prozentsatz der höchstwertigen Übertragungsfaktoren Kij zur Bestimmung des Volumenstroms verwendet wird. Damit wird verhindert, dass Übertragungsfaktoren mit einem potenziell schlechten Signal-Rausch-Verhältnis in die Berechnung eingehen.

Den Ausführungsbeispielen gemäß den Fig. 1 und 2 ist jedenfalls gemeinsam, dass die Mehrzahl an Magnetfeldeinrichtungen M1, M1', M2, M2', M3, M3', die mit einer Mehrzahl von Erregungsströmen I1, I2, I3 beaufschlagt werden, auch unterschiedlich orientierte Magnetfelder im Messrohr 3 erzeugen. Das gilt sinngemäß auch für die mit der Mehrzahl an Messelektroden E1, E1', E2, E2', E3, E3' erfassten mehreren Messspannungen U1, U2, U3, die entlang verschieden orientierter Messpfade innerhalb des Messrohrs 3 gemessen werden, wobei ein Messpfad im Wesentlichen bestimmt ist durch die gedachte Verbindungslinie zischen den an der Messung beteiligten Messelektroden E1 und E1', E2 und E2', E3 und E3' (siehe Pfeile an den Bezeichnern U1, U2, U3).

Den gezeigten Ausführungsbeispielen ist ebenfalls gemeinsam, dass mehr Übertragungsfaktoren Kij bestimmt werden als Messspannungen U1, U2, U3 erfasst worden sind, und dass mehr Übertragungsfaktoren Kij zur Berechnung des Volumenstroms herangezogen werden als Messspannungen U1, U2, U3 erfasst worden sind. In diesem Fall stellt sich der deutliche Zugewinn an Informationen gegenüber der bekannten alleinigen Nutzung der Messspannungen deutlich ein.

Wie ohne Weiteres erkennbar ist, sind die Fig. 1 bis 4 schematische PrinzipDarstellungen und keine technischen oder gar schaltungstechnischen ingenieurmäßigen Zeichnungen. Um die Darstellungen einfach zu halten, sind nur die erforderlichen Zusammenhänge angedeutet. Insoweit ist teilweise darauf verzichtet worden, geschlossene Stromkreise darzustellen. So ist beispielsweise bei den Magnetfeldeinrichtungen Mi, Mi' nur angedeutet, dass sie mit einem Erregungsstrom Ii beaufschlagt werden. Es ist selbstverständlich, dass dazu eine leistungselektronische Schaltung erforderlich ist, die Teil der Steuer- und Auswertevorrichtung 5 ist oder jedenfalls von ihr angesteuert wird. So ist auch beispielsweise nicht dargestellt, dass die Spulen Mi, Mi' in der Realität höchstwahrscheinlich galvanische miteinander gekoppelt sind und der Strom Ii dann natürlich nur von einer einzigen Stromquelle erzeugt wird. Ähnliches gilt für schematisch dargestellte Spannungsmessungen und Ausgänge von Stromquellen. In beiden Fällen sind prinzipiell natürlich zwei elektrische Anschlüsse erforderlich (Messung zweier Potenziale, Realisierung einer Stromschleife), die in den Figuren nicht ausdrücklich dargestellt und für das Verständnis auch nicht erforderlich sind.

Das Verfahren 1 bei dem magnetisch-induktiven Durchflussmessgerät 2 nach Fig. 1 berechnet den Volumenstrom des Mediums 4 mit einer nichtlinearen Funktion f in mehreren der strömungsabhängigen Übertragungsfaktoren Kij.

Das Verfahren 1 bei dem magnetisch-induktiven Durchflussmessgerät 2 nach Fig. 2 berechnet den Volumenstrom des Mediums 4 mittels normierter Übertragungsfaktoren Kij,norm unter Verwendung der bekannten oder gemessenen kinematischen Viskosität v des Mediums 4. Die normierten Übertragungsfaktoren (Kij,norm = Kij/v) werden nichtlinear mit Hilfe einer nichtlinearen Funktion g auf einen Schätzwert für eine Gesamt-Reynolds-Zahl abgebildet, wobei der Volumenstrom dann unter Verwendung der Funktion g berechnet wird unter Berücksichtigung der kinematischen Viskosität v des strömenden Mediums 4.

Von Interesse ist insgesamt, wie die Übertragungsfaktoren Kij bestimmt werden. Dazu gibt es verschiedene Ansätze, die verschiedene Vorteile mit sich bringen und in verschiedener Hinsicht optimal sind.

Ganz allgemein lässt sich sagen, dass zur Ermittlung des Volumenstroms n Magnetfeldeinrichtungen Mi, Mi' bestromt werden und m Messspannungen erfasst werden und m*n Übertragungsfaktoren Kij bestimmt werden. Wie bereits dargelegt, liegen bei dem magnetisch-induktiven Durchflussmessgerät 2 gemäß Fig. 1 zwei Magnetfeldeinrichtungen M1, M1', M2, M2' vor, die mit zwei Erregungsströmen I1, I2 beaufschlagt werden, und es werden zwei Messspannungen U1, U2 erfasst, sodass vier Übertragungsfaktoren K11, K12, K21, K22 bestimmt werden können. Bei dem Ausführungsbeispiel gemäß Fig. 2 gibt es drei Magnetfeldeinrichtungen M1, M1', M2, M2', M3, M3', die mit drei Erregungsströmen I1, I2 beaufschlagt werden, und es werden drei Messspannungen U1, U2 erfasst, sodass neun Übertragungsfaktoren K11, K12, K21, K22 bestimmt werden können. Dass die Anzahl der Erregungsströme und die Anzahl der Messspannungen in beiden Beispielen gleich ist, ist Zufall, es sind genauso gut Ausführungsbeispiele denkbar, bei denen die Anzahl der Erregungsströme und die Anzahl der Messspannungen voneinander abweichen. In jedem Fall sind aber die Zusammenhänge gemäß den Gleichungen 13 und 14 (bzw. allgemeiner der Zusammenhang gemäß Gleichung 2) zu nutzen, um die Übertragungsfaktoren Kij zu bestimmen.

Wenn die Magnetfeldeinrichtungen Mi, Mi' nur einmal mit einer Kombination von Erregungsströmen I1, I2, ..., In beaufschlagt werden, sind die zuvor genannten Gleichungssysteme unterbestimmt, mit dem Ergebnis, dass sich die Übertragungsfaktoren Kij nicht eindeutig bestimmen lassen. Es müssen also mehrere Messungen durchgeführt werden, um zu einer eindeutigen Bestimmung der Übertragungsfaktoren Kij gelangen zu können.

In den Ausführungsbeispielen sind die Verfahren 1 so ausgestaltet, dass in n zeitlich hintereinander ausgeführten Messzyklen mit n linear unabhängigen Erregungsstromvektoren Iv1, Iv2, ..., Ivn mit jeweils den Erregungsströmen I1, I2, ..., In die Magnetfeldeinrichtungen Mi, Mi' bestromt werden. Jeder Erregungsstromvektor Iv1, Iv2, ..., Ivn umfasst also eine Kombination von den Erregungsströmen I1, I2, ..., In. Wenn also n Messzyklen mit n Anregungskombinationen vom Erregungsströmen der Magnetfeldeinrichtungen Mi, Mi' und mit m Messungen der Messspannungen erfolgt sind, lassen sich die Übertragungsfaktoren Kij eindeutig bestimmen, siehe dazu die allgemeinen Erläuterungen, die zu den Gleichungen 8 und 9 geführt haben.

Bei dem Ausführungsbeispiel gemäß Fig. 1 werden in einem Messzyklus die Magnetfeldeinrichtungen M1, M1' und M2, M2', die einen von null verschiedenen Erregungsstrom I1, I2 aufweisen, gleichzeitig bestromt. Das hat den Vorteil, dass die n=2 Messzyklen sehr schnell abgeschlossen sind, jedoch werden dann auch zwei separat voneinander und zeitgleich zueinander betreibbare Stromquellen benötigt. Ein weiterer Vorteil besteht darin, dass bei gleichzeitiger Anregung mehrer Erregungsströme das Signal-Rausch-Verhältnis der Messung insgesamt verbessert wird.

Das Verfahren 1 ist bei dem Ausführungsbeispiel gemäß Fig. 2 abweichend realisiert. Hier ist in einem Messzyklus genau ein Erregungsstrom Ii von null verschieden, sodass in einem Messzyklus sofort m=3 Übertragungsfaktoren Kij bestimmt werden können. Wenn beispielsweise nur der Erregungsstrom I1 ungleich 0 ist, dann gibt es auch nur eine alleinige Wirkung des Erregungsstroms I1 auf die Messspannungen U1, U2, U3, sodass die Übertragungsfaktoren K11, K21, K31 unmittelbar bestimmbar sind. Es muss also tatsächlich kein Gleichungssystem gelöst werden. Ein weiterer Vorteil besteht darin, dass nur eine einzige Erregungsstromquelle realisiert werden muss, die dann in jedem Messzyklus mittels einer Demultiplexeranordnung auf die entsprechende Magnetfeldeinrichtung geschaltet wird. In diesem Fall ist mit dem Einsatz von weniger Erregungsstromquellen als Magnetfeldeinrichtungen auch kein Zeitverlust verbunden.

Bei dem Ausführungsbeispiel gemäß Fig. 2 ist ferner realisiert, dass die von null verschiedenen Erregungsströme I1, I2, I3 in den Erregungsstromvektoren die gleiche Amplitude haben, nämlich in Höhe der maximal vorgesehenen Amplitude im Betrieb des magnetisch-induktiven Durchflussmessgeräts. Bei dieser Ausgestaltung muss die einzig erforderliche Erregungsstromquelle nicht mal eine steuerbare Stromquelle sein, es kann sich um eine fest eingestellte Stromquelle handeln, was den schaltungstechnischen und auch ökonomischen Aufwand zur Realisierung dieser Lösung verringert.

Bei allen Ausführungsbeispielen werden die an den Messelektroden Ei entstehenden elektrochemischen Spannungsanteile Uchi an den Messspannungen Ui ermittelt. Damit werden dann bereinigte Messspannungen Ui' berechnet, durch Subtraktion der elektrochemischen Spannungsanteile Uch1 von den Messspannungen Ui. Das zuvor dargestellte Verfahren 1 wird dann mit den bereinigten Messspannungen Ui' anstelle der Messspannungen Ui durchgeführt.

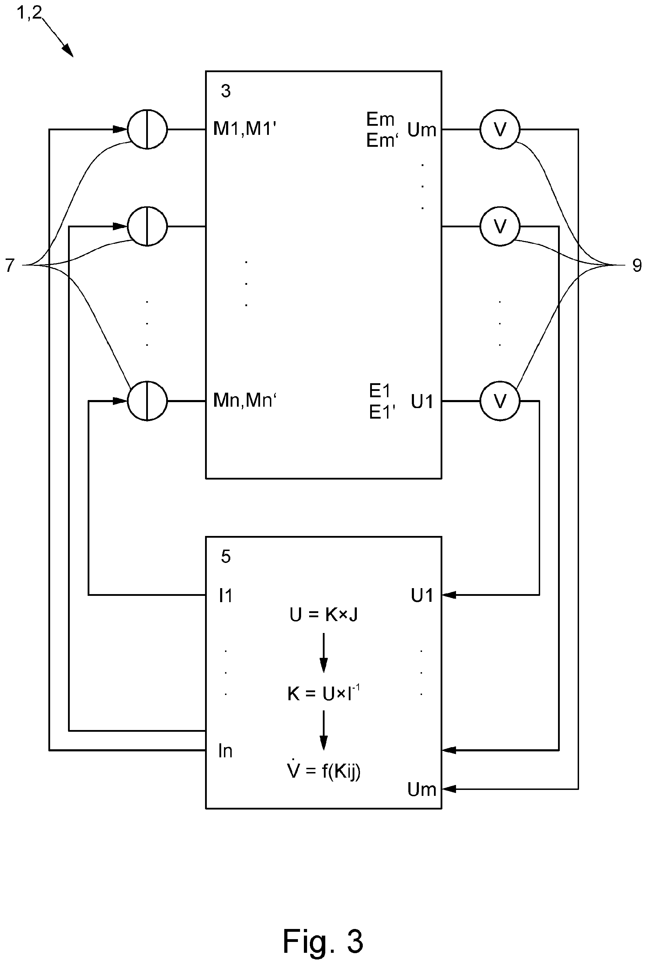

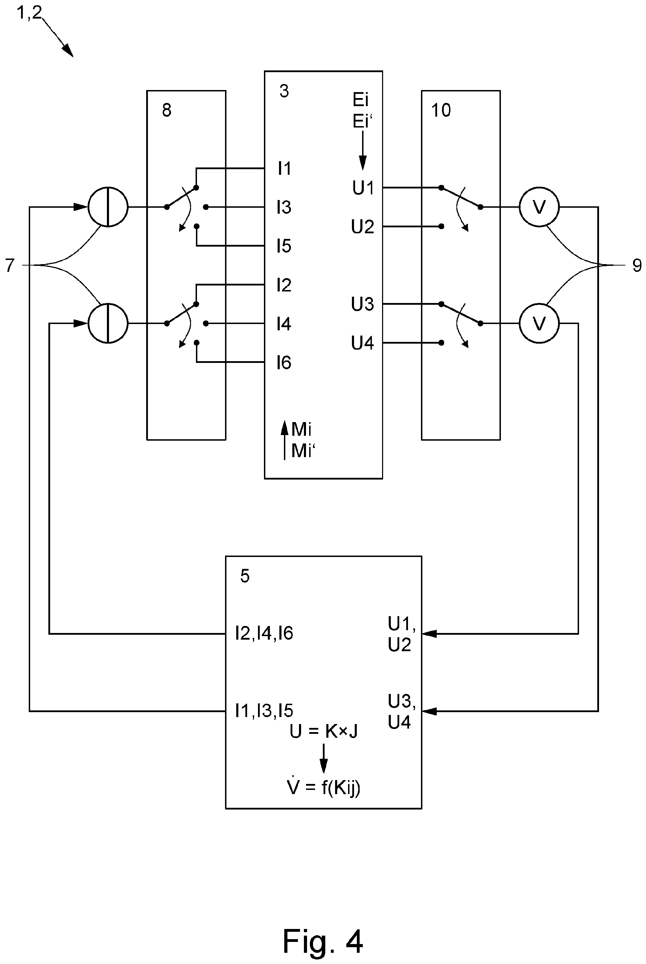

Die Fig. 3 und 4 gehen nochmals auf einen Aspekt ein, der im Hinblick auf die Ausführungsbeispiele in den Fig. 1 und 2 schon angedeutet worden ist, hier jedoch noch einmal zentral angesprochen wird.

Bei dem magnetisch-induktiven Durchflussmessgerät 2 in Fig. 3 sind so viele Erregungsstromquellen 7 vorhanden, wie verschiedene Erregungsströme Ii zur Beaufschlagung der Magnetfeldeinrichtungen Mi, Mi' erforderlich sind, sodass die Magnetfeldeinrichtungen Mi, Mi' gleichzeitig mit einem Erregungsstrom Ii beaufschlagbar sind und auch beaufschlagt werden. Vorteile sind hier schnelle Messzyklen und ein hohes erzielbares Signal-Rausch-Verhältnis. Die Umsetzung ist jedoch schaltungstechnisch aufwendig. Zudem sind bei dem magnetisch-induktiven Durchflussmessgerät 2 nach Fig. 3 so viele Spannungsmessvorrichtungen 9 vorhanden, wie verschiedene zu erfassende Messspannungen Ui vorhanden sind, sodass die Messspannungen Ui gleichzeitig erfassbar sind. Der Vorteil sind schnelle Messzyklen bei jedoch hohem schaltungstechnischen Aufwand. Das magnetisch-induktive Durchflussmessgerät gemäß Fig. 3 ist auf hohe Messraten bei hohem erzielbaren Signal-Rausch-Verhältnis ausgelegt.

Davon unterscheidet sich die Situation bei dem magnetisch-induktiven Durchflussmessgerät 2 gemäß Fig. 4.

Hier sind weniger Erregungsstromquellen 7 vorhanden - nämlich nur zwei - als verschiedene Erregungsströme I1, I2, I3, I4, I5, I6 zur Beaufschlagung der sechs Magnetfeldeinrichtungen M1, M1', ..., M6, M6' erforderlich sind. Die Erregungsstromquellen 7 werden mit einer Demultiplexeranordnung 8 sequenziell auf die Magnetfeldeinrichtungen Mi, Mi' geschaltet, sodass die Magnetfeldeinrichtungen Mi, Mi' zum Teil gleichzeitig und zum Teil zeitlich hintereinander mit einem Erregungsstrom Ii beaufschlagbar sind und auch beaufschlagt werden.

Zudem sind bei dem magnetisch-induktiven Durchflussmessgerät 2 nach Fig. 4 auch weniger Spannungsmessvorrichtungen 9 vorhanden - nämlich nur zwei -, als verschiedene Messspannungen U1, U2, U3, U4 vorhanden sind. Die Spannungsmessvorrichtungen 9 werden mit einer Multiplexeranordnung 10 sequenziell auf die Messelektroden Ei, Ei' geschaltet, sodass die Messspannungen Ui zum Teil gleichzeitig und zum Teil zeitlich hintereinander erfassbar sind und auch erfasst werden. Bei dem magnetisch-induktiven Durchflussmessgerät gemäß Fig. 4 steht ein reduzierter schaltungstechnischer und kostenmäßiger Aufwand im Vordergrund unter Inkaufnahme langsamerer erzielbarer Messraten und möglicherweise auch eines schlechteren Signal-Rausch-Verhältnisses.

Die Maßnahmen müssen selbstverständlich nicht zusammen realisiert werden. Es ist also durchaus möglich, beispielsweise mit weniger Erregungsstromquellen als Magnetfeldeinrichtungen zu arbeiten, aber genau so viele Spannungsmessvorrichtungen vorzusehen, wie es zu erfassende Messspannungen gibt. Die Vor- und Nachteile müssen im konkreten Fall gegeneinander abgewogen werden.

**Bezugszeichen**

| | |
|---|---|
| 1 | Verfahren |
| 2 | magnetisch-induktives Durchflussmessgerät |
| 3 | Messrohr |
| 4 | Medium |
| 5 | Steuer- und Auswertevorrichtung |
| 6 | äußerer Ring |
| 7 | Erregungsstromquelle |
| 8 | Demultiplexeranordnung |
| 9 | Spannungsmessvorrichtungen |
| 10 | Multiplexeranordnung |

| | |
|---|---|
| i, j | allgemeine Zählindizes |

| | |
|---|---|
| Mi, Mi' | Magnetfeldeinrichtungen |
| Ei, Ei' | Messelektroden |
| I | Erregungsstrommatrix |
| Ij | Erregungsstrom |
| Iv | Erregungsstromvektor eines Messzyklus |
| U | Messspannungsmatrix |
| Ui | Messspannung |
| Uv | Messspannungsvektor eines Messzyklus |
| K | Übertragungsfaktormatrix |
| Kij | Übertragungsfaktor |
| Wij | Wichtungsfaktor |
| f, g | nichtlineare Funktionen in Kij |
| v | kinematische Viskosität des leitenden Mediums |
| Kij,norm | mit der kinemat. Viskosität normierter Übertragungsfaktor |
| Uchi | elektrochemische Elektrodenspannung |
| Uch | Vektor der elektrochemischen Elektrodenspannungen |
| Ui' | Messspannung bereinigt von Elektrodenspannung |

**Patentansprüche**

1. Verfahren (1) zum Betreiben eines magnetisch-induktiven Durchflussmessgeräts (2), mit einem Messrohr (3) zum Führen eines elektrisch leitfähigen Mediums (4), mit einer Mehrzahl (n) von mit Erregungsströmen (Ii) separat bestrombaren Magnetfeldeinrichtungen (Mi, Mi') zur Erzeugung wenigstens eines das Messrohr (3) zumindest teilweise senkrecht zur Strömungsrichtung des Mediums (4) durchsetzenden Magnetfeldes, mit einer Mehrzahl an Messelektroden (Ei, Ei') zum Erfassen einer Mehrzahl (m) von in dem Medium induzierten Messspannungen (Ui), und mit einer Steuer- und Auswertevorrichtung (5) zur Erzeugung des Magnetfeldes durch Bestromung wenigstens einer der Magnetfeldeinrichtungen (Mi, Mi') und zur Berechnung des Volumenstroms des Mediums (4) durch das Messrohr (3),
**dadurch gekennzeichnet,**
**dass** eine Mehrzahl der Magnetfeldeinrichtungen (Mi, Mi') mit einer Mehrzahl (n) von Erregungsströmen (Ii) beaufschlagt wird, dass eine Mehrzahl (m) von Messspannungen (Ui) erfasst wird, dass eine Mehrzahl von strömungsabhängigen Übertragungsfaktoren (Kij) aus den Erregungsströmen (Ii) und den durch die Erregungsströme (Ii) verursachten Messspannungen (Ui) bestimmt wird, wobei ein Übertragungsfaktor (Kij) das Verhältnis ist von dem durch einen Erregungsstrom (Ij) verursachten Anteil an einer Messspannung (Ui) zu der Höhe dieses Erregungsstroms (Ij), und berechnen des Volumenstroms des Mediums (4) aus einer Mehrzahl der bestimmten strömungsabhängigen Übertragungsfaktoren (Kij).

2. Verfahren (1) nach Anspruch 1, **dadurch gekennzeichnet, dass** mehrere der Mehrzahl von Magnetfeldeinrichtungen (Mi, Mi') gleichzeitig mit einer Mehrzahl von Erregungsströmen (Ii) beaufschlagt wird.

3. Verfahren (1) nach Anspruch 1 oder 2, **dadurch gekennzeichnet, dass** der Volumenstrom des Mediums (4) aus einer Linearkombination mehrerer der strömungsabhängigen Übertragungsfaktoren (Kij) berechnet wird, insbesondere wobei die Übertragungsfaktoren (Kij) durch Wichtungsfaktoren (Wij) gewichtet werden.

4. Verfahren (1) nach Anspruch 1 oder 2, **dadurch gekennzeichnet, dass** der Volumenstrom des Mediums (4) mit einer nichtlinearen Funktion (f) in mehreren der strömungsabhängigen Übertragungsfaktoren (Kij) berechnet wird, insbesondere wobei die Übertragungsfaktoren (Kij) in der nichtlinearen Funktion (f) durch Wichtungsfaktoren (Wij) gewichtet werden.

5. Verfahren (1) nach Anspruch 4, **dadurch gekennzeichnet, dass** normierte Übertragungsfaktoren (Kij,norm) berechnet werden unter Verwendung der bekannten oder gemessenen kinematischen Viskosität (v) des Mediums 4 und dass die normierten Übertragungsfaktoren (Kij,norm = Kij/v)) nichtlinear mit Hilfe einer nichtlinearen Funktion (g) auf einen Schätzwert für eine Gesamt-Reynolds-Zahl abgebildet werden, wobei der Volumenstrom dann unter Verwendung der Funktion (g) berechnet wird unter Berücksichtigung der kinematischen Viskosität (v) des strömenden Mediums (4).

6. Verfahren (1) nach Anspruch 4 oder 5, **dadurch gekennzeichnet, dass** die nichtlineare Funktion (f, g) durch ein künstliches neuronales Netzwerk gebildet wird mit einer Eingangsschicht mit wenigstens einer Anzahl an Eingangsneuronen entsprechend der Anzahl der verwendeten Übertragungsfaktoren (Kij) als Eingangsgrößen, mit einer Ausgangsschicht mit wenigstens einem Ausgangsneuron zur Ausgabe zumindest des Volumenstroms des Mediums (4) als Ausgangsgröße und mit zumindest einer Zwischenschicht mit wenigstens zwei Neuronen, insbesondere wobei das künstliche neuronale Netzwerk mit Kalibrierdaten trainiert wird.

7. Verfahren (1) nach einem der Ansprüche 1 bis 6, **dadurch gekennzeichnet, dass** nur eine bestimmte Anzahl oder ein bestimmter Prozentsatz der höchstwertigen Übertragungsfaktoren (Kij) zur Bestimmung des Volumenstroms verwendet wird, oder dass nur Übertragungsfaktoren (Kij) zur Bestimmung des Volumenstroms verwendet werden, die über einem bestimmten Grenzwert liegen, insbesondere wobei der Grenzwert ein bestimmter Prozentwert vom Wertebereich aller Übertragungsfaktoren (Kij) ist.

8. Verfahren (1) nach einem der Ansprüche 1 bis 7, **dadurch gekennzeichnet, dass** zur Ermittlung des Volumenstroms n Magnetfeldeinrichtungen (Mi, Mi') bestromt werden und m Messspannungen (Ui) erfasst werden und m*n Übertragungsfaktoren (Kij) bestimmt werden.

9. Verfahren (1) nach Anspruch 8, **dadurch gekennzeichnet, dass** in n zeitlich hintereinander ausgeführten Messzyklen mit n linear unabhängigen Erregungsstromvektoren (Iv1, Iv2, ..., Ivn) mit jeweils den Erregungsströmen (I1, I2, ..., In) die Magnetfeldeinrichtungen (Mi, Mi') bestromt werden, insbesondere wobei in einem Messzyklus die Magnetfeldeinrichtungen (Mi, Mi'), die einen von null verschiedenen Erregungsstrom (I1, I2, ..., In) aufweisen, gleichzeitig bestromt werden.

10. Verfahren (1) nach Anspruch 9, **dadurch gekennzeichnet, dass** in einem Messzyklus genau ein Erregungsstrom (Ii) von null verschieden ist, sodass in einem Messzyklus sofort m Übertragungsfaktoren (Kij) bestimmt werden können.

11. Verfahren (1) nach Anspruch 9 oder 10, **dadurch gekennzeichnet, dass** die Erregungsströme (I1, I2, ..., In) in den Erregungsstromvektoren (Iv1, Iv2, ..., Ivn) so gewählt werden, dass eine aus den Erregungsstromvektoren (Iv1, Iv2, ..., Ivn) als Zeilenvektoren oder Spaltenvektoren gebildete Erregungsstrommatrix (I) orthogonal ist, wobei die in den Messzyklen erfassten Messspannungen (Ui) kreuzkorreliert werden mit den Erregungsströmen (Ii), um eine Optimalfilterung (matched filter) zu realisieren.

12. Verfahren (1) nach Anspruch 9 oder 10, **dadurch gekennzeichnet, dass** die Erregungsströme (I1, I2, ..., In) in den Erregungsstromvektoren (Ivi) so gewählt werden, dass eine aus den Erregungsstromvektoren (Ivi) als Zeilenvektoren oder Spaltenvektoren gebildete Erregungsstrommatrix (I) orthogonal ist, wobei die Erregungsstrommatrix (I) durch eine Householder-Transformation eines frei gewählten Erregungsstromvektors (Ivi) erhalten wird, insbesondere wobei solchen Erregungsstrommatrizen (I) der Vorzug gegeben wird, die eine geringe Varianz in den Werten der Matrixelemente haben.

13. Verfahren (1) nach einem der Ansprüche 9 bis 12, **dadurch gekennzeichnet, dass** die von null verschiedenen Erregungsströme (Ii) in den Erregungsstromvektoren (Ivi) die gleiche Amplitude haben, insbesondere die im Betrieb des magnetisch-induktiven Durchflussmessgeräts (2) maximal vorgesehenen Amplituden aufweisen.

14. Verfahren (1) nach einem der Ansprüche 1 bis 13, **dadurch gekennzeichnet, dass** die elektrochemischen Spannungsanteile (Uchl, Uch2, ..., Uchn) an den Messspannungen (U1, U2, ..., Un) ermittelt werden und bereinigte Messspannungen (U', U1', U2',..., Un') berechnet werden, durch Subtraktion der elektrochemischen Spannungsanteile (Uchl, Uch2, ..., Uchn) von den Messspannungen (U1, U2, ..., Un), und wobei das Verfahren (1) mit den bereinigten Messspannungen (U', U1', U2',..., Un') durchgeführt wird.

15. Magnetisch-induktives Durchflussmessgerät (2), mit einem Messrohr (3) zum Führen eines elektrisch leitfähigen Mediums (4), mit einer Mehrzahl (n) von mit Erregungsströmen (I1, I2, ..., In) separat bestrombaren Magnetfeldeinrichtungen (Mi, Mi') zur Erzeugung wenigstens eines das Messrohr (3) zumindest teilweise senkrecht zur Strömungsrichtung des Mediums (4) durchsetzenden Magnetfeldes, mit einer Mehrzahl an Messelektroden (Ei, Ei') zum Erfassen einer Mehrzahl (m) von in dem Medium (4) induzierten Messspannungen (U1, U2, ..., Um), und mit einer Steuer- und Auswertevorrichtung (5) zur Erzeugung des Magnetfeldes durch Bestromung wenigstens einer der Magnetfeldeinrichtungen (Mi, Mi') und zur Berechnung des Volumenstroms des Mediums (4) durch das Messrohr (3), **dadurch gekennzeichnet,**
**dass** die Steuer- und Auswertevorrichtung (5) so ausgestaltet ist, dass das magnetisch-induktive Durchflussmessgerät (2) im Betrieb das Verfahren (1) gemäß einem der Ansprüche 1 bis 14 ausführt.

16. Magnetisch-induktives Durchflussmessgerät (2) nach Anspruch 15, **dadurch gekennzeichnet, dass** mindestens so viele Erregungsstromquellen (7) vorhanden sind wie verschiedene Erregungsströme (Ii) zur Beaufschlagung der Magnetfeldeinrichtungen (Mi, Mi') erforderlich sind, sodass die Magnetfeldeinrichtungen (Mi, Mi') gleichzeitig mit einem Erregungsstrom (Ii) beaufschlagbar sind.

17. Magnetisch-induktives Durchflussmessgerät (2) nach Anspruch 15, **dadurch gekennzeichnet, dass** weniger Erregungsstromquellen (7) vorhanden sind als verschiedene Erregungsströme (Ii) zur Beaufschlagung der Magnetfeldeinrichtungen (Mi, Mi') erforderlich sind, dass die Erregungsstromquellen (7) mit einer Demultiplexeranordnung (8) sequenziell auf die Magnetfeldeinrichtungen (Mi, Mi') geschaltet werden, sodass die Magnetfeldeinrichtungen (Mi, Mi') zeitlich hintereinander oder zum Teil gleichzeitig und zum Teil zeitlich hintereinander mit einem Erregungsstrom (Ii) beaufschlagbar sind.

18. Magnetisch-induktives Durchflussmessgerät (2) nach einem der Ansprüche 15 bis 17, **dadurch gekennzeichnet, dass** mindestens so viel Spannungsmessvorrichtungen (9) vorhanden sind, wie verschiedene zu erfassende Messspannungen (Ui) vorhanden sind, sodass die Messspannungen (Ui) gleichzeitig erfassbar sind.

19. Magnetisch-induktives Durchflussmessgerät (2) nach einem der Ansprüche 15 bis 17, **dadurch gekennzeichnet, dass** weniger Spannungsmessvorrichtungen (9) vorhanden sind, als verschiedene Messspannungen (Ui) vorhanden sind, dass die Spannungsmessvorrichtungen (9) mit einer Multiplexeranordnung (10) sequenziell auf die Messelektroden (Ei, Ei') geschaltet werden, sodass die Messspannungen (Ui) zeitlich hintereinander oder zum Teil gleichzeitig und zum Teil zeitlich hintereinander erfassbar sind.

**Fig. 1**

Fig. 2

Fig. 3

EP 4 462 085 A1

Fig. 4

18

Europäisches
Patentamt

European
Patent Office

Office européen
des brevets

**EUROPÄISCHER RECHERCHENBERICHT**

Nummer der Anmeldung

EP 24 17 1809

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 3 211 384 A2 (KROHNE MESSTECHNIK GMBH [DE]) 30. August 2017 (2017-08-30) | 1-3, 7-13, 15-19 | INV. G01F1/58 G01F25/10 |
| Y | * Absatz [0033] - Absatz [0040] * | 14 | |
| A | * Absatz [0047] * | 4-6 | ADD. |
| | * Absatz [0056] * | | G01F1/60 |
| | * Absatz [0064] - Absatz [0073] * | | |
| | * Abbildungen 1-9 * | | |
| | ----- | | |
| A | JP 2002 168665 A (YOKOGAWA ELECTRIC CORP) 14. Juni 2002 (2002-06-14) * Abbildung 1 * | 1-19 | |
| | ----- | | |
| A | EP 2 901 108 B1 (MICRO MOTION INC [US]) 9. Januar 2019 (2019-01-09) * das ganze Dokument * | 1-19 | |
| | ----- | | |
| A | TRAECHTLER A ET AL: "TOMOGRAPHISCHE METHODEN BEI DER INDUKTIVEN DURCHFLUSSMESSUNG ZUR BESTIMMUNG VON STROEMUNGSPROFILEN UND -PARAMETERN", TM - TECHNISCHES MESSEN/PLATTFORM F?R METHODEN, SYSTEME UND ANWENDUNGEN DER MESSTECHNIK, R.OLDENBOURG VERLAG. MUNCHEN, DE, Bd. 64, Nr. 10, 1. Oktober 1997 (1997-10-01), Seiten 365-373, XP000750766, ISSN: 0171-8096 * das ganze Dokument * | 1-19 | RECHERCHIERTE SACHGEBIETE (IPC) G01F |
| | ----- | | |
| Y | RU 2 645 834 C1 (OBSHCHESTVO S OGRANICHENNOJ OTVETSTVENNOSTYU TBN ENERGOSERVIS [RU]) 28. Februar 2018 (2018-02-28) * Seite 24, Zeile 30 - Seite 25, Zeile 10 * | 14 | |
| | ----- | | |

Der vorliegende Recherchenbericht wurde für alle Patentansprüche erstellt

| Recherchenort | Abschlußdatum der Recherche | Prüfer |
|---|---|---|
| Den Haag | 18. September 2024 | Verdoodt, Erik |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

                            
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 24 17 1809

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-09-2024

| Im Recherchenbericht angeführtes Patentdokument | Datum der Veröffentlichung | Mitglied(er) der Patentfamilie | Datum der Veröffentlichung |
|---|---|---|---|
| EP 3211384 A2 | 30-08-2017 | KEINE | |
| JP 2002168665 A | 14-06-2002 | KEINE | |
| EP 2901108 B1 | 09-01-2019 | AU 2013324132 A1 | 09-04-2015 |
| | | BR 112015006279 A2 | 04-07-2017 |
| | | CA 2886198 A1 | 03-04-2014 |
| | | CN 103674131 A | 26-03-2014 |
| | | CN 203177906 U | 04-09-2013 |
| | | EP 2901108 A1 | 05-08-2015 |
| | | JP 6219961 B2 | 25-10-2017 |
| | | JP 2015534067 A | 26-11-2015 |
| | | RU 2015115728 A | 20-11-2016 |
| | | US 2014083199 A1 | 27-03-2014 |
| | | WO 2014051966 A1 | 03-04-2014 |
| RU 2645834 C1 | 28-02-2018 | KEINE | |

Für nähere Einzelheiten zu diesem Anhang : siehe Amtsblatt des Europäischen Patentamts, Nr.12/82

EPO FORM P0461